# EUROPEAN PATENT SPECIFICATION

(11) **EP 0 555 233 B1**
(45) Date of publication and mention of the grant of the patent: **23.07.1997**
(21) Application number: 91916600.9
(22) Date of filing: 27.08.1991
(51) Int. Cl.: H04M 1/65, H04M 11/10

(54) **GREETING CARD WITH ELECTRONIC SOUND RECORDING**
GRUSSKARTE MIT ELEKTRONISCHER SCHALLAUFZEICHNUNG
CARTE DE VOEUX, D'ANNIVERSAIRE OU AUTRES COMPRENANT UN ENREGISTREMENT SONORE ELECTRONIQUE

(43) Date of publication of application: 18.08.1993
(73) Proprietor: JOHNSON, Ellen Bumpus, Miami, FL 33168-6910 (US); IVEY, Daryl Leonard, Miami, FL 33168-6910 (US)
(72) Inventor: JOHNSON, Ellen Bumpus, Miami, FL 33168-6910 (US); IVEY, Daryl Leonard, Miami, FL 33168-6910 (US)
(74) Representative: Wagner, Karl H., Dipl.-Ing.
(86) International application number: US9106129
(87) International publication number: WO9304549

(56) References cited:
- CA-A- 1 278 862
- US-A- 3 462 157
- US-A- 3 970 803
- US-A- 4 381 558
- US-A- 4 677 657
- US-A- 4 961 217
- US-A- 5 007 078

## Description

### Background of the Invention

The present invention relates to a greeting card with an electronic sound recording that embodies a personalized message for the recipient of the card.

Often times, a greeting card is personalized with writings and pictures. The present invention advances this personalization of cards by delivering an audio message that is electronically embodied in circuitry that is carried within the greeting card.

U.S. Patent No. 4,531,310 to Acson, et al. discloses a button or badge having a voice or sound synthesizer circuit 16 that is activated by closure of an appropriate switch. The audio sounds are embodied in a read only memory (ROM) integrated circuit in the voice or sound synthesizer circuit. The badge also includes a power source for the circuitry. However, Acson does not disclose utilizing a personalized message that is stored in the ROM integrated circuit. U.S. Patent No. 4,607,747 to Steiner discloses a carton for gifts that includes an acoustic generator that is turned on when the carton is opened. U.S. Patent No. 3,462,157 to Barnett, et al. discloses an audible greeting card. A sound strip is incorporated in the card and a movable means having a pick-up needle is also incorporated within the card. When the pick-up is moved by the recipient of the card over the sound strip, audible sounds are emitted by the card. U.S. Patent No. 4,222,188 to Tarrant, et al. discloses a merchandise display. The display may include a wind-up musical reproduction device or a cassette tape player. A continuous loop tape is also disclosed in Tarrant, et al. U.S. Patent No. 4,541,188 to Sadorus discloses a reflective audio assembly. Sadorus utilizes a tape machine embodied in a picture frame structure.

A personalized electronic greeting card is known from document CA-A-1 278 862. The user has to go to a specific place where a greeting card apparatus is located. After the preparation of the card he has to go to the post office for sending the card. He has the possibility of examining various greeting cards, of choosing a specific one and to personalise the selected card.

### Objects of the Invention

It is an object of the present invention to provide a personalized greeting card that emits audible sounds representative of a personalized message from the sender of the card to the recipient of the card.

It is another object of the present invention to provide a personalized greeting card wherein the personalized message is recorded as electronic signals in an electronic memory device.

It is a further object of the present invention to provide for the conversion of the personalized message as given by the sender of the card into electronic signals and storing those signals in an independent, detachable, electronic memory device.

### Summary of the Invention

In one embodiment, the personalized greeting card includes an independent, detachable, electronic memory device that stores electronic signals. Within the card is disposed circuitry that includes a retrieval mechanism for retrieving the electronic signals from the memory device, a voice synthesizer which obtains these electronic signals and products audible sounds representative of the personalized message, and switch means that controls the retrieving device and the voice synthesizer. The memory device is mounted in the card with this circuitry. Prior to mounting the memory device in the card, the memory device is mounted in a carriage of an EPFROM translation machine that converts the personalized message from the sender of the card into appropriate electronic signals and stores those representative electronic signals in the memory device.

### Brief Description of the Drawings

Further objects and advantages of the present invention can be found in the detailed description of the preferred embodiment when taken in conjunction with the accompanying drawings in which:
Figure 1 illustrates a perspective view of the greeting card carrying the electronic circuitry;
Figure 2 illustrates, in block diagram form, the electronic circuitry carried by the greeting card; and
Figure 3 illustrates, in block diagram form, electronic circuitry used to convert the personalized message into electronic signals that are stored in the integrated circuit memory device.

### Detailed Description of the Preferred Embodiment

The present invention relates to a greeting card which carries an electronic embodiment of a personalized message and which audibly announces the personalized message when circuitry in the card is appropriately activated.

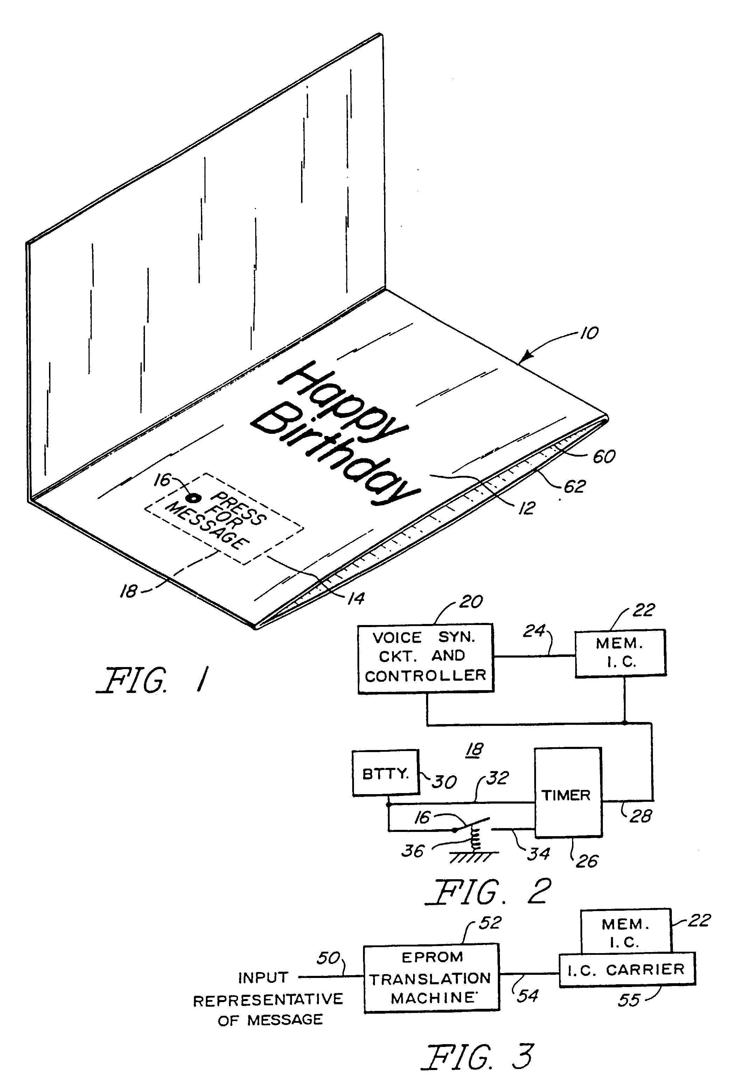

Figure 1 shows a perspective view of greeting card 10 having a central surface region 12 that contains indicia representative of an appropriate greeting. These greetings may be unique to the following events and situations: Birthdays, Valentine's Day, Mother's Day, Father's Day, Christmas, Jewish Holidays, Easter, Get Well Information, Friendship Information, Love and Affection Phrases, and others of similar purpose.

Card 10 has a secondary surface region 14 which carried indicia instructing the recipient of the card to press a switch 16 which activates an electronic circuit 18 that is disposed in the interior of card 10. Upon depression of switch 16, audible signals are emitted by circuit 18 representative of a personalized message from the sender of the card to the recipient of the card.

Figure 2 shows, in block diagram form, electronic circuit 18. The circuit includes a voice synthesizer circuit and controller 20 that is coupled to memory integrated circuit 22 via data and control line 24. Both of these circuits are coupled to a timer 26 via control and/or power line 28. Battery 30 is also part of circuit 18. One power line 32 runs directly to timer 26 and a second power line 34 extends between battery 30 and timer 26 but is interrupted by switch 16. Switch 16 is biased in an open position by spring 36 that is appropriately mounted to a support structure within card 10.

In operation, switch 16 is closed for a short period which activates timer 26. Timer 26 closes a switch between power line 32 and line 28 for a predetermined period of time thereby activating voice synthesizer circuit and controller 20 as well as memory integrated circuit 22. Voice synthesizer circuit and controller 20 then retrieves electronic signals stored in memory 22 via data and control lines 24, converts the signals in audible sounds and then emits the audible sounds that are representative of these stored electronic signals.

Figure 3 illustrates the conversion of the personalized message to electronic signals that are stored in memory integrated circuit 22. An electrical input, representative of the personalized message, is placed on input line 50 to erasable program read only memory (EPROM) translation machine 52. The EPROM translation machines applies electrical signals on data and control line 54 to integrated circuit carrier 55. Memory integrated circuit 22 is plugged into carrier 55 and receives those electronic signals representative of the personalized message. EPROM 52 fixes the stored signals into memory 22 as is known to persons of ordinary skill in the art.

Memory integrated circuit 22 is then detached from carrier 55 and plugged into or attached to voice synthesizer and controller 20 as well as timer 26 as shown in Figure 2. Electronic circuitry 18 is then placed intermediate layers 60 and 62 of card 10 such that switch 16 is disposed within secondary surface region 14 of the card.

In a preferred embodiment, the personalized message and personalized greeting card is developed as follows. The person wishing to send the greeting cards calls a toll-free telephone number that connects the sender with a centralized location. At that centralized location, a telephone answering machine is programmed to give certain instructions and receive certain information from the sender relative to the personalized greeting card.

Initially, the instructions would inform the sender that they have reached the centralized location and inform the sender that at the first beep, the sender is to announce his name, address and telephone number for billing purposes. Lastly, the initial instructions would inform the sender not to hang up the telephone since further information is needed to produce the personalized greeting card. The telephone answering device would issue a beep and the answering machine would record the billing information on the sender of the greeting card.

After a predetermined period of time, a second group of instructions would be announced to the sender of the card. The second group of instructions would request the sender to give the card recipient's name, the recipient's address and request that the sender of the card identify what type of card he wishes to send, i.e., Birthday card, Christmas card, Mother's Day card, etc. .The answer machine would then beep and begin recording that further information about the recipient of the greeting card.

A third set of instructions would then be announced to the sender of the greeting card after an appropriate time. This third set of instructions would give information about the length of the personalized message and other data about the message. The answer machine would then beep and the personalized message, as announced by the sender of the greeting card, would be recorded by the machine.

Lastly, a closing set of instructions would be given to the sender of the greeting card thanking the sender for using the services and asking for his return business.

Personal at the central location could then utilize this data regarding the billing, the recipient's name and address, and the type of card to prepare an appropriate greeting card with the appropriate indicia at central surface region 12. More importantly, personnel at the central region would then convert the personalized message stored on the answer machine via EPROM 52 into representative electronic signals and store those representative signals in memory integrated circuit 22. Memory integrated circuit 22 is commonly a read only memory (ROM) device. The ROM is then detached from carrier 55 and inserted into electronic circuitry 18. Preferably, the personnel at the central location then checks circuit 18 to insure that the personalized message has been properly recorded in ROM 22 and voice synthesizer and controller 20 is operating correctly. Circuit 18 is then placed in the interior of card 10 and the card is sent to the recipient as requested by the sender of the card.

The claims appended hereto are meant to cover modifications and changes within the scope of the present invention. For example, the electronic circuitry is shown in Figure 2 is only exemplary. Timer 26 may be replaced by any type of device which limits the operating time synthesizer/controller 20. The claims are meant to be so construed.

## Claims

1. A method of creating an individually personalized greeting card assembly including a carrier portion with an electronic sound recording embodying a personalized message, comprising the steps of:
communicating by telephone from a remote location with a programmed answering machine at a centralized location and establishing a telephone circuit between the locations, said machine being programmed to provide spaced sets of outgoing messages and receive spaced sets of incoming messages,
communicating from the centralized location to the remote location a first set of outgoing messages advising that upon a certain audible signal, the user should provide billing information including identity, address, and telephone number,
recording said billing information provided by the user via telephone from the remote location at the centralized location,
communicating a second set of instructions from the centralized location requesting information as to the identity and address of the intended recipient of the card,
recording said recipient information provided by the user via telephone from the remote location at the centralized location,
communicating a third set of instructions from the centralized location via telephone to the remote location advising the user of data about the type of message which can be provided upon an audible signal,
recording the message given via telephone from the remote location to the centralized location,
preparing an appropriate greeting card including the steps of:
converting said personalized message stored in the answering machine from an auditory state into representative electronic signals including inputing the electronic signals in an erasable programmable read-only translation means,
processing the electronic signals in an integrated circuit carrier, and storing and fixing said electronic signals in a memory integrated circuit,
detaching the memory integrated circuit and electrically connecting the memory integrated circuit in a circuit means including a voice synthesizer means, controller means, timer means, battery means, and a normally open switch means, and
attaching said circuit means to said card assembly carrier portion with a switch means accessible for closing the circuit means.

2. The method as set forth in claim 1 including the step of delivering said card assembly to said recipient, closing the switch means, and
converting the stored electronic signals into audible sounds representing the stored electronic signals and comprising the personalized message.

3. The method as set forth in claim 1 including the step of preparing a bill at the centralized location and forwarding same to the user of the method.

## Patentansprüche

1. Verfahren zur Schaffung einer individuellen, personalisierten Grußkartenanordnung mit einem Trägerteil mit einer elektronischen Tonaufzeichnung, die eine personalisierte Nachricht verkörpert, wobei die folgenden Schritte vorgesehen sind:
telefonisches Inverbindungtreten von einer ferngelegenen Stelle mit einer programmierten Beantwortungsmaschine an einer zentralen Stelle und Herstellen eines Telefonkreises zwischen den Stellen, wobei die Maschine derart programmiert ist, daß sie beabstandete Sätze von nach außen gehende Nachrichten liefert und beabstandete Sätze von ankommenden Nachrichten empfängt,
Übertragung von der zentralen oder zentralisierten Stelle zu der entfernt gelegenen Stelle einen ersten Satz von nach außen gehenden Nachrichten und Hinweisen darauf, daß auf ein bestimmtes hörbares Signal hin der Benutzer Rechnungsstellungsinformation liefern sollte, einschließlich der Identität, der Adresse und der Telefonnummer,
Aufzeichnen der Rechnungsinformation, die durch den Benutzer über das Telefon von der entfernt gelegenen Stelle an die zentrale Stelle geliefert wurde,
Übertragung eines zweiten Satzes von Befehlen von der zentralen Stelle, und zwar Information hinsichtlich der Identität und Adresse des beabsichtigten Empfängers der Karte anfordernd,
Aufzeichnen der Empfängerinformation geliefert durch den Benutzer über Telefon von der entfernt gelegenen Stelle an die zentrale Stelle,
Übertragung eines dritten Satzes von Befehlen von der Zentralstelle über Telefon an die entfernt gelegene Stelle, und zwar den Benutzer von Daten Mitteilung machend hinsichtlich der Art der Nachricht, die auf ein hörbares Signal hin vorgesehen werden kann,
Aufzeichnen der Nachricht, die über Telefon von der entfernten Stelle an die zentrale Stelle gegeben wurde,
Herstellen einer geeigneten Grußkarte, wobei die folgenden Schritte vorgesehen sind:
Umwandlung der personalisierten Nachricht, die in der Beantwortungsmaschine gespeichert ist aus einem hörbaren Zustand in dafür repräsentative elektronische Signale, einschließlich Eingeben der elektronischen Signale in löschbare, programmierbare Nur-Lese-Übertragungsmittel,
Verarbeiten der elektronischen Signale in einem integrierten Schaltungsträger und Speichern und
Festlegen der elektronischen Signale in eine integrierte Speicherschaltung,
Abnehmen der integrierten Speicherschaltung und elektrisches Verbinden der integrierten Speicherschaltung in Schaltungsmitteln, einschließlich Sprachsynthetesiermitteln, Steuermitteln, Zeitsteuermitteln, Batteriemitteln und normalerweise offenen Schaltermitteln, und
Anbringen der erwähnten Schaltungsmittel an den erwähnten Kartenanordnungsträgerteil mit einem Schaltmittel, welches zum Schließen der Schaltungsmittel zugänglich ist.

2. Verfahren nach Anspruch 1, wobei der Schritt des Lieferns der Kartenanordnung an den Empfänger, das Schließen der Schaltermittel und das Umwandeln der gespeicherten elektronischen Signale in hörbare Töne vorgesehen ist, und zwar gespeicherte elektronische Signale repräsentierend und die personalisierte Nachricht aufweisend.

3. Verfahren nach Anspruch 1 einschließlich des Schrittes der Herstellung einer Rechnung an der zentralen Stelle und Schicken derselben an den Benützer des Verfahrens.

## Revendications

1. Procédé de formation d'une structure de carte de voeux personnalisée de façon individuelle comportant une partie support munie d'un enregistrement sonore électronique contenant un message personnalisé comprenant les étapes suivantes :
communiquer par téléphone à partir d'un emplacement éloigné avec un répondeur programmé à un emplacement centralisé et établir un circuit téléphonique entre les emplacements, le répondeur étant programmé pour fournir des ensembles espacés de messages sortants et recevoir des ensembles espacés de messages incidents,
communiquer à partir de l'emplacement centralisé vers l'emplacement éloigné un premier ensemble de messages sortant avisant du fait que, à la suite d'un certain signal audible, l'utilisateur doit fournir des informations de facturation incluant son identité, son adresse et son numéro de téléphone,
enregistrer des informations de facturation fournies par l'utilisateur par l'intermédiaire du téléphone à partir de l'emplacement éloigné au niveau de l'emplacement centralisé,
communiquer un second ensemble d'instructions à partir de l'emplacement centralisé requérant des informations quant à l'identité et à l'adresse du destinataire de la carte,
enregistrer les informations de destinataire fournies par l'utilisateur par l'intermédiaire du téléphone à partir de l'emplacement éloigné au niveau de l'emplacement centralisé,
communiquer un troisième ensemble d'instructions à partir de l'emplacement centralisé par l'intermédiaire du téléphone vers l'emplacement éloigné, informant l'utilisateur au sujet du type de message qui peut être fourni selon un signal audible,
enregistrer le message donné par téléphone à partir de l'emplacement éloigné au niveau de l'emplacement centralisé,
préparer une carte de voeux appropriée selon les étapes suivantes :
convertir le message personnalisé mémorisé dans le répondeur d'un état sonore en signaux électroniques représentatifs, incluant l'introduction des signaux électriques dans un moyen de transposition à mémoire morte programmable et effaçable,
traiter les signaux électroniques dans un support de circuit intégré, et mémoriser et fixer les signaux électriques dans un circuit intégré de mémoire,
détacher le circuit intégré de mémoire et connecter électriquement le circuit intégré de mémoire à un moyen de circuit incluant un moyen de synthétiseur vocal, un moyen de commande, un moyen de minuteur, un moyen de pile et un moyen de commutateur normalement ouvert, et
fixer le moyen de circuit à la partie support de la structure de carte, un moyen de comnutateur étant accessible pour fermer le moyen de circuit.

2. Procédé selon la revendication 1, comprenant l'étape de fourniture de la structure de carte au destinataire, la fermeture du moyen de commutateur et la conversion des signaux électroniques mémorisés en sons audibles représentant les signaux électriques mémorisés et comprenant le message personnalisé.

3. Procédé selon la revendication 1, comprenant l'étape consistant à préparer une facture au niveau de l'emplacement centralisé et à l'envoyer à l'utilisateur du procédé.
